# EUROPÄISCHE PATENTANMELDUNG

(11) **EP 3 660 297 A1**
(43) Veröffentlichungstag der Anmeldung: **03.06.2020**
(21) Anmeldenummer: 19208013.3
(22) Anmeldetag: 08.11.2019
(51) Int. Cl.: F02D 19/12, F02M 25/022, F02M 25/028, F02M 25/03, F02M 25/14

(54) **VERFAHREN ZUR KLOPFREGELUNG DURCH INDIREKTE ODER DIREKTE ZUFÜHRUNG EINES FLÜSSIGEN ZUSATZMEDIUMS IN MINDESTENS EINEN ZYLINDER EINER FREMDGEZÜNDETEN BRENNKRAFTMASCHINE**

(30) Priorität: 27.11.2018 DE 102018130011
(71) Anmelder: Volkswagen AG, 38440 Wolfsburg (DE)
(72) Erfinder: MAAS, Christian, 38179 Schwülper (DE); GROTE, Andreas, 38176 Wendeburg (DE); BLOCK, Gerald, 38165 Lehre (DE)
(74) Vertreter: Gulde & Partner

(57) **Zusammenfassung**

Die Erfindung betrifft ein Verfahren zur zylinderindividuellen Klopfregelung durch Einspritzung eines flüssigen Zusatzmediums in mindestens einen Zylinder einer fremdgezündeten Brennkraftmaschine mit den Schritten: Erkennen einer klopfenden Verbrennung in mindestens einem Zylinder der Brennkraftmaschine, Erfassen des Betriebspunktes der Brennkraftmaschine zu einem Zeitpunkt (t_{K}), in dem eine klopfende Verbrennung in dem mindestens einen Zylinder der Brennkraftmaschine erkannt wird, Aktivieren der Klopfregelung und Absetzen mindestens eines Einspritzereignisses indirekt oder direkt in den Brennraum des mindestens einen Zylinders.

Erfindungsgemäß ist eine Festlegung einer variablen Erst-Einspritzmenge (Q_{E}, Q_{Offset}) in Abhängigkeit des erfassten Betriebspunktes der Brennkraftmaschine zum Zeitpunkt (t_{K}) vorgesehen, die in einem ersten Einspritzereignis (n =1) in einem ersten Arbeitsspiel (iₙ'; n = 1) des mindestens einen Zylinders eingespritzt wird und es erfolgt eine Festlegung von variablen Zyklusparametern eines ersten Absteuerzyklus in Abhängigkeit des erfassten Betriebspunktes der Brennkraftmaschine zum Zeitpunkt in dem eine klopfende Verbrennung in dem mindestens einen Zylinder der Brennkraftmaschine erkannt wird, wonach eine Durchführung des Absteuerzyklus durch Absetzen des ersten Einspritzereignisses und des mindestens einen weiteren Einspritzereignisses indirekt oder direkt in den Brennraum des mindestens einen Zylinders vorgenommen wird.

## Beschreibung

Die Erfindung betrifft ein Verfahren zur zylinderindividuellen Klopfregelung durch Einspritzung eines flüssigen Zusatzmediums, wobei vorgesehen ist, dass eine klopfende Verbrennung in mindestens einem Zylinder der Brennkraftmaschine erkannt wird, ein Betriebspunkt der Brennkraftmaschine zu einem Zeitpunkt erfasst wird, in dem eine klopfende Verbrennung in dem mindestens einen Zylinder der Brennkraftmaschine erkannt wird, und eine Klopfregelung aktiviert wird, wonach mindestens ein Einspritzereignis indirekt oder direkt in den Brennraum des mindestens einen Zylinders abgesetzt wird.

Im Bereich ottomotorischer Brennverfahren stehen derzeit Maßnahmen zur Effizienzsteigerung im Fokus. Bei Ottomotoren stellt das "Klopfen" im hohen Lastbereich eine Restriktion dar, wirkungsgradoptimale Verbrennungsabläufe zu realisieren. Es ist in bekannter Weise möglich, die Klopfgrenze zu verschieben, das heißt den klopffreien Kennfeldbereich zu vergrößern, oder den Motor zumindest ohne "Sicherheitsabstand" direkt an der Klopfgrenze zu betreiben, um die Effizienz des Motors entweder direkt in dem betroffenen Kennfeldbereich oder aber durch Erhöhung des Verdichtungsverhältnisses im gesamten Betriebsbereich zu steigern.

Klopfregelung durch Zündwinkelrücknahme:
Eine Klopfregelung, die mit Zündwinkelrücknahmen dynamisch auf das Klopfen des Motors reagiert, als Maßnahme, Motoren im Hochlastbereich so dicht wie möglich an der Klopfgrenze zu betreiben, ist bereits in allen elektronischen Motorsteuerungen Standard. Die Klopfregelung in der bekannten Ausführung zieht den Zündwinkel jedoch nicht dauerhaft zurück, was dem angesprochenen "Sicherheitsabstand" entsprechen würde. Die Klopfregelung in der bekannten Ausführung ist nur beim tatsächlichen Auftreten von klopfenden Verbrennungen aktiv. Die Klopfregelung mittels Zündwinkelrücknahme weist zwei Nachteile auf: Zum einen wird mit der Zündwinkelrücknahme die Verbrennungslage in Richtung schlechterer Wirkungsgrade verschoben. Zum anderen erhöht sich mit der daraus resultierenden, späteren Verbrennungslage die Abgastemperatur. Da der betreffende klopfende Betriebsbereich der Hochlastbereich ist, in dem die höchsten Abgastemperaturen herrschen, ist ein direkter Zusammenhang mit der maximalen beziehungsweise der maximal zulässigen Abgastemperatur gegeben. Derzeit werden die genannten Wirkungsgradnachteile der Zündwinkelrücknahme in Kauf genommen und die Einhaltung der zulässigen Abgastemperatur mit den bekannten Maßnahmen durch individuellen Bauteilschutz sichergestellt. Die derzeit gängige Klopfregelung detektiert klopfende Verbrennungen zylinderindividuell mit Hilfe eines Klopfsensors. Wird auf "Klopfen" erkannt, wird der Zündwinkel für den betreffenden Zylinder um ein appliziertes Delta nach spät verstellt und anschließend rampenförmig auf den ursprünglichen Basiszündwinkel zurückgestellt. Wird erneut eine klopfende Verbrennung erkannt, wiederholt sich das Ganze, egal ob bereits wieder der Basiszündwinkel erreicht ist oder ob der Zündwinkel sich noch auf der Rampe befindet. Durch die Zündwinkelrücknahme wird die Verbrennung in Richtung "spät" verschoben.

Klopfregelung durch Wassereinspritzung:
Davon ausgehend sind weitere Maßnahmen in der Entwicklung. Neben der Abgasrückführung ist auch die Wassereinspritzung eine Möglichkeit, der Klopfneigung von Motoren entgegenzuwirken und die Klopfgrenze zu verschieben. Wird Wassereinspritzung als Maßnahme gewählt, so ergibt sich bei dauerhafter Anwendung das Problem, dass zur Einspritzung große Mengen an Wasser notwendig sind. Mit anderen Worten, die dauerhafte Wassereinspritzung hat den Nachteil, dass große Mengen an Wasser mitgeführt werden müssen. Darüber hinaus kann ein nicht unbeträchtlicher Teil des Wassers in den Ölkreislauf gelangen, was entsprechende Risiken mit sich bringt. Sowohl die maximalen Verbrennungsdrücke als auch die maximalen Verbrennungstemperaturen werden gesenkt. Dadurch wird die Klopfneigung reduziert und der Zylinder wird mit der Zündwinkelverstellung auf die nicht-klopfende Seite der Klopfgrenze gebracht. Aufgrund der kühlenden Wirkung bei der Verdampfung des eingespritzten Wassers sowie der klopfhemmenden Wirkung des somit vorhandenen Wasserdampfes, reduziert sich ebenfalls die Klopfneigung im Zylinder. Das heißt, die Klopfgrenze kann aufgrund der Wassereinspritzung derart verschoben werden, dass sich der Zylinder bei sonst gleichen Randbedingungen ebenfalls auf der nicht-klopfenden Seite der Klopfgrenze wiederfindet. Als Stand der Technik wird auf die Druckschrift DE 10 2017 201 805 A1 verwiesen. Die Druckschrift betrifft ein Verfahren zum direkten Einspritzen eines Zusatzmediums in den mindestens einen Zylinder einer fremdgezündeten Brennkraftmaschine, wobei sich das Zusatzmedium von einem zum Betrieb der Brennkraftmaschine eingebrachten Kraftstoff unterscheidet und das Zusatzmedium zur Verminderung einer klopfenden Verbrennung eingespritzt wird. Es wird aufgezeigt, dass ein bestimmtes Einspritzungsverhältnis von Kraftstoffmenge und Zusatzmedium, insbesondere Wasser als Zusatzmedium, vorgesehen ist, wobei eine je Arbeitsspiel in einen Zylinder eingespritzte Menge an Zusatzmedium und eine je Arbeitsspiel in den Zylinder eingebrachte Menge an Kraftstoff in einem Verhältnis m_{water} ≤ 0.2 m_{fuel} steht. Die Menge an benötigtem Zusatzmedium wird gemäß der Druckschrift DE 10 2017 201 805 A1 maßgeblich von der Klopfneigung einer spezifischen Brennkraftmaschine, insbesondere vom Verdichtungsverhältnis der Brennkraftmaschine, bestimmt.

Die Druckschrift DE 10 2014 204 509 A1 offenbart einen Verbrennungsmotor, der dadurch gekennzeichnet ist, dass jeder Zylinder des Verbrennungsmotors zumindest ein Einlassventil aufweist, wobei das Luftansaugsystem zumindest ein Ansaugrohr für jedes Einlassventil aufweist und in jedem Ansaugrohr ein Wasserinjektor angeordnet ist. Vorgesehen ist ein Verfahren zum Betreiben eines mit einer solchen Wassereinspritzanlage ausgerüsteten Verbrennungsmotors, mittels der Wasser in ein Luftansaugsystem des Verbrennungsmotors eingespritzt wird, mit folgenden Schritten: a) - Feststellen, dass eine irreguläre Verbrennung vorliegt, b) - Einspritzen von Wasser durch die Wassereinspritzanlage, und c) - Einstellen der Menge des einzuspritzenden Wassers und eines Zündwinkels, so dass eine vorgegebene Abgastemperatur erreicht wird. Vorgesehen ist, dass eine Menge des Wassers, das durch die Wassereinspritzanlage eingespritzt wird, mit zunehmender Klopfhäufigkeit des Verbrennungsmotors erhöht wird. Dabei werden gegebenenfalls folgende zusätzliche Randbedingungen wirksam: d) - Feststellen, dass eine zur Verfügung stehende Menge an Wasser einen vordefinierten Schwellwert unterschritten hat, so dass bei Unterschreitung eine Wassereinspritzung nur noch bei hohen Drehzahlen und/oder Lasten ausgeführt wird, und - e) Vermeiden des Einspritzens, wenn eine Drehzahl des Verbrennungsmotors eine vordefinierte Grenzdrehzahl unterschreitet.

Die Druckschrift DE 10 2015 208 359 A1 beschreibt ergänzend, dass eine Wassereinspritzung nicht in den Ansaugtrakt, sondern direkt in den jeweiligen Zylinder erfolgt, was eine noch präzisere Berücksichtigung der Wassereinspritzung bei der Klopfregelung ermöglicht. In einem Betriebsmodus mit Wassereinspritzung wird laufend geprüft, ob in einem oder mehreren der Zylinder eine klopfende Verbrennung auftritt. Ist dies der Fall, wird der Wasseranteil der aktuell erfolgenden Wassereinspritzung bestimmt. In Abhängigkeit von dem ermittelten Wasseranteil und dem aktuellen Betriebspunkt der Brennkraftmaschine werden die Parameter für die Klopfregelung bestimmt. Diese umfassen vorzugsweise einen Zündwinkel, der für die typischerweise durchzuführende Spätverstellung der Zündung herangezogen wird, und eine Regelzeit, also die Zeitdauer bis zur erfolgenden Frühverstellung der Zündung. Typischerweise wird eine Spätverstellung des Zündwinkels mit Wassereinspritzung kleiner sein als ohne Wassereinspritzung. In einem anderen Betriebsmodus, in dem zunächst keine Wassereinspritzung ist, ist vorgesehen, sobald eine klopfende Verbrennung erkannt wird, eine Wassereinspritzung zu aktivieren und zu prüfen, ob mit dieser Maßnahme bereits das Klopfen verhindert werden kann. Andernfalls wird zusätzlich eine Verstellung des Zündzeitpunkts durchgeführt und die Regeldauer bestimmt, wobei selbstverständlich der Einfluss der Wassereinspritzung bei der Verbrennung wie zuvor beschrieben berücksichtigt wird.

Der Erfindung liegt nun die Aufgabe zugrunde, eine Klopfregelung nach Erkennung einer klopfenden Verbrennung einer mit Wassereinspritzung betreibbaren Brennkraftmaschine zu optimieren.

Ausgangspunkt der Erfindung ist ein Verfahren zur zylinderindividuellen Klopfregelung durch Einspritzung eines flüssigen Zusatzmediums in mindestens einen Zylinder einer fremdgezündeten Brennkraftmaschine mit den Schritten:
Erkennen einer klopfenden Verbrennung in mindestens einem Zylinder der Brennkraftmaschine.

Erfassen des Betriebspunktes der Brennkraftmaschine zu einem Zeitpunkt, in dem eine klopfende Verbrennung in dem mindestens einen Zylinder der Brennkraftmaschine erkannt wird.

Aktivieren der Klopfregelung und Absetzen mindestens eines Einspritzereignisses indirekt oder direkt in den Brennraum des mindestens einen Zylinders.

Erfindungsgemäß sind folgende Schritte vorgesehen:
Festlegung einer variablen Erst-Einspritzmenge in Abhängigkeit des erfassten Betriebspunktes der Brennkraftmaschine zum Zeitpunkt, die in einem ersten Einspritzereignis in einem ersten Arbeitsspiel des mindestens einen Zylinders eingespritzt wird.

Festlegung von variablen Zyklusparametern eines ersten Absteuerzyklus in Abhängigkeit des erfassten Betriebspunktes der Brennkraftmaschine zum Zeitpunkt, in dem eine klopfende Verbrennung in dem mindestens einen Zylinder der Brennkraftmaschine erkannt wird.

Der erste Absteuerzyklus umfasst erfindungsgemäß folgende Zyklusparameter:
Eine absteuerzyklusseitige Festlegung einer spezifischen Anzahl von weiteren Einspritzereignissen in den dem ersten Arbeitsspiel nachfolgenden Arbeitsspielen des mindestens einen Zylinders.

Eine absteuerzyklusseitige Festlegung der mindestens einen weiteren von der Erst-Einspritzmenge ausgehenden weiteren Einspritzmenge mindestens eines weiteren Einspritzereignisses in mindestens einem dem ersten Arbeitsspiel nachfolgenden Arbeitsspiel des mindestens einen Zylinders.

Schließlich erfolgt die Durchführung des Absteuerzyklus gemäß den festgelegten Zyklusparametern durch Absetzen des ersten Einspritzereignisses und des mindestens einen weiteren Einspritzereignisses indirekt oder direkt in den Brennraum des mindestens einen Zylinders.

Vorgesehen ist, dass zur Festlegung der Erst-Einspritzmenge und zur Festlegung der variablen Zyklusparameter des ersten Absteuerzyklus folgende Parameter des Betriebspunktes der Brennkraftmaschine zum Zeitpunkt, in dem eine klopfende Verbrennung in dem mindestens einen Zylinder der Brennkraftmaschine erkannt wird, berücksichtigt wird/werden.

Als Betriebsparameter zum Zeitpunkt, in dem eine klopfende Verbrennung in dem mindestens einen Zylinder der Brennkraftmaschine erkannt wird, wird/werden die Amplitudenhöhe des durch einen Klopfsensor ermittelten Klopfens des jeweiligen mindestens einen Zylinders und/oder die Motorlast der Brennkraftmaschine und/oder die Drehzahl der Brennkraftmaschine und/oder die Zylindertemperatur des jeweiligen mindestens einen Zylinders und/oder die Außentemperatur in der Umgebung der Brennkraftmaschine berücksichtigt.

Erfindungsgemäß wird wie folgt vorgegangen: Die Erst-Einspritzmenge des ersten Einspritzereignisses wird größer gewählt, wenn die zuvor genannten Parameter des Betriebspunktes der Brennkraftmaschine zum Zeitpunkt, in dem eine klopfende Verbrennung in dem mindestens einen Zylinder der Brennkraftmaschine erkannt wird, größer werden.

In bevorzugter Ausgestaltung der Erfindung ist vorgesehen, dass zwischen der Erst-Einspritzmenge des ersten Einspritzereignisses und der Einspritzmenge des mindestens einen weiteren Einspritzereignisses in den Absteuerzyklen ein quantitativer Sprung festgelegt wird, wodurch eine rampenförmige Reduzierung der Einspritzmenge des mindestens einen weiteren Einspritzereignisses zwischen dem ersten Arbeitsspiel und dem mindestens einen absteuerzyklusseitigen weiteren Arbeitsspiel des Zylinders der Brennkraftmaschine vorgenommen wird.

Dabei ist vorgesehen, dass der oder die in den Absteuerzyklen festgelegte/n quantitative/n Sprung/Sprünge der weiteren Einspritzereignisse kleiner werden, wenn die zuvor genannten Parameter des Betriebspunktes der Brennkraftmaschine zum Zeitpunkt, in dem eine klopfende Verbrennung in dem mindestens einen Zylinder der Brennkraftmaschine erkannt wird, größer werden.

Das Verfahren zeichnet sich bevorzugt dadurch aus, dass der zuerst festgelegte erste Absteuerzyklus nach dem Absetzen des ersten Einspritzereignisses mit der Erst-Einspritzmenge im ersten Arbeitsspiel zu einem späteren Zeitpunkt in Abhängigkeit des erfassten Betriebspunktes der Brennkraftmaschine zu diesem späteren Zeitpunkt wie folgt angepasst wird:
Es erfolgt bevorzugt eine Anpassung der variablen Zyklusparameter des ersten Absteuerzyklus durch Neufestlegung der variablen Zyklusparameter in einem nächsten Absteuerzyklus, so dass in Abhängigkeit des zu dem späteren Zeitpunkt erfassten Betriebspunktes eine diskontinuierliche oder kontinuierliche Regelanpassung der Klopfregelung durch Anpassung des neuen Absteuerzyklus oder der neuen Absteuerzyklen erfolgt.

Vorgesehen ist wiederum erfindungsgemäß, dass zur Festlegung des nächsten Absteuerzyklus als Parameter des Betriebspunktes der Brennkraftmaschine zu dem späteren Zeitpunkt wieder die Motorlast der Brennkraftmaschine und/oder die Drehzahl der Brennkraftmaschine und/oder die Zylindertemperatur des jeweiligen mindestens einen Zylinders und/oder die Außentemperatur in der Umgebung der Brennkraftmaschine berücksichtigt wird/werden.

Wie erwähnt, ist in bevorzugter Ausgestaltung der Erfindung vorgesehen, dass zwischen der Erst-Einspritzmenge des ersten Einspritzereignisses und der Einspritzmenge des mindestens einen weiteren Einspritzereignisses in den Absteuerzyklen ein quantitativer Sprung festgelegt wird, wodurch eine rampenförmige Reduzierung der Einspritzmenge des mindestens einen weiteren Einspritzereignisses zwischen dem ersten Arbeitsspiel und dem mindestens einen absteuerzyklusseitigen weiteren Arbeitsspiel des Zylinders der Brennkraftmaschine vorgenommen wird.

Analog zu dem ersten Absteuerzyklus ist bei den weiteren angepassten Absteuerzyklen ebenfalls vorgesehen, dass der oder die in Absteuerzyklen festgelegte/n quantitative/n Sprung/Sprünge der weiteren Einspritzereignisse kleiner werden, wenn der oder die genannten Parameter des Betriebspunktes der Brennkraftmaschine zu dem späteren Zeitpunkt oder den späteren Zeitpunkten größer wird/werden.

In bevorzugter Ausgestaltung der Erfindung weisen die zwischen den Einspritzereignissen festgelegten quantitativen Sprünge innerhalb des ersten Absteuerzyklus oder des mindestens einen nächsten angepassten Absteuerzyklus eine einheitlich oder eine uneinheitliche Sprunghöhe auf.

Das Verfahren wird mittels einer Steuer- und/oder Regeleinrichtung durchgeführt, die dazu eingerichtet ist, die zylinderindividuelle Klopfregelung durch Einspritzung eines flüssigen Zusatzmediums in mindestens einen Zylinder der Brennkraftmaschine einer fremdgezündeten Brennkraftmaschine durchzuführen.

Erfindungsgemäß ist ein Computerprogramm für eine Steuer- und/oder Regeleinrichtung für eine fremdgezündete Brennkraftmaschine zur zylinderindividuellen Klopfregelung durch Einspritzung eines flüssigen Zusatzmediums in mindestens einen Zylinder der Brennkraftmaschine vorgesehen, welches zur Durchführung eines Verfahrens programmiert ist.

Eine nicht näher dargestellte Brennkraftmaschine weist mindestens einen, insbesondere mehrere Zylinder auf, in denen jeweils ein Brennraum ausgebildet ist. Jedem Brennraum ist eine Zündkerze und eine eine Zündspule umfassende Zündanlage zugeordnet, so dass eine entsprechende Fremdzündung gewährleisten ist. Dabei ist in bekannter Weise jedem Zylinder ein Klopfsensor zugeordnet. Die Zündanlagen und die Klopfsensoren sind in bekannter Weise beispielsweise über Signalleitungen und/oder über ein Bussystem mit einem Steuergerät verbunden, in dem die Steuer- und/oder Regeleinrichtung implementiert ist. In dem Steuergerät ist das Computerprogramm zur Durchführung des erfindungsgemäßen Verfahrens abgelegt.

Zudem ist eine Vorrichtung zur Wassereinspritzung vorgesehen, mittels der ein Zusatzmedium über eine Druckleitung mit mindestens einem Einspritzelement verbunden ist, das indirekt in den mindestens Zylinder in ein Ansaugrohr der Brennkraftmaschine oder direkt in den mindestens einen Zylinder in den oder die Brennräume der Brennkraftmaschine einspritzt. Wenn die Einspritzung nicht in den Ansaugtrakt, sondern direkt in den jeweiligen Zylinder erfolgt, wird in vorteilhafter Weise eine präzisere und sparsamere Einspritzung des Zusatzmediums im Rahmen des erfindungsgemäßen Verfahrens zur Klopfregelung erreicht.

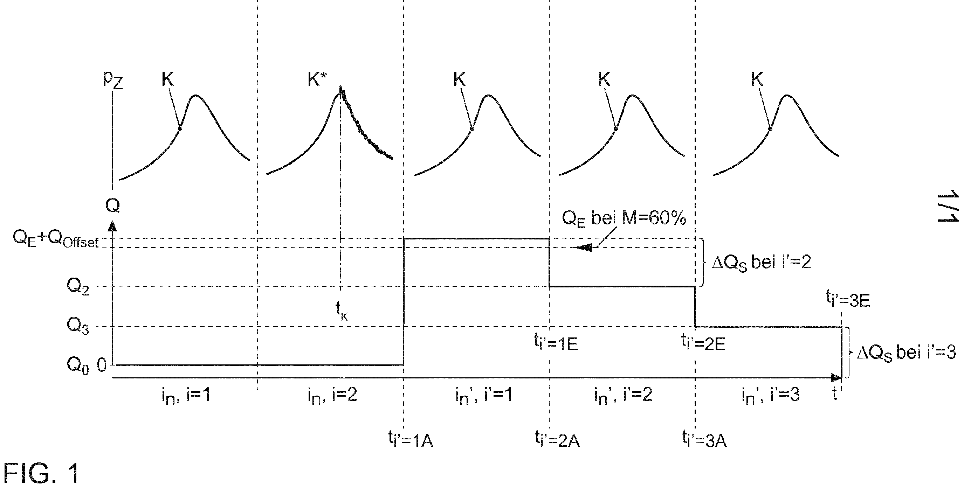

Die Erfindung wird nachfolgend anhand der zugehörigen Figur 1 erläutert.

Die Figur 1 zeigt in einer schematischen Darstellung Arbeitsspiele iₙ; iₙ' eines Zylinders einer Brennkraftmaschine vor einer Wassereinspritzung und während (') einer Wassereinspritzung. Zu einem Arbeitsspiel iₙ; iₙ' ist jeweils eine Zylinderdruck-Kennlinie K, K* und eine Einspritzmenge Q über der Zeit t gezeigt.

Die Zylinderdruck-Kennlinie K zeigt den Druckverlauf einer nicht-klopfenden Verbrennung im Brennraum eines Zylinders, während die Zylinderdruck-Kennlinie K* den Druckverlauf einer klopfenden Verbrennung im Brennraum desselben Zylinders verdeutlicht.

Erfindungsgemäß ist ein Verfahren zur Klopfregelung vorgesehen, welches ausschließlich auf eine zylinderindividuelle Wassereinspritzung basiert. Mit anderen Worten, die nachteilige Zündwinkelrücknahme wird nicht durchgeführt.

Vorgesehen ist, dass in bekannter Weise zylinderindividuell auf mindestens einem Zylinder eine klopfende Verbrennung erkannt wird.

Beispielsweise wird gemäß Figur 1 in einem Arbeitsspiel iₙ; n = 1 keine klopfende Verbrennung und im nächsten Arbeitsspiel iₙ; n = 2 eine klopfende Verbrennung erkannt, wie anhand der Kennlinien K, K* verdeutlicht wird.

Erfindungsgemäß ist vorgesehen, nicht mit einer bisher üblichen Zündwinkelrücknahme eine Klopfregelung vorzunehmen, sondern eine Klopfregelung in der Motorsteuerung zu implementieren, welche ausschließlich auf der Zusatzmedium-Einspritzung als Reaktion zur klopfenden Verbrennung basiert.

Als Zusatzmedium wird reines Wasser als klopffeste Flüssigkeit oder Alkohole als klopffeste Flüssigkeit und Gemische davon eingesetzt.

Die Erfindung wird nachfolgend anhand des Zusatzmediums Wasser als klopffeste Flüssigkeit erläutert.

Erfindungsgemäß wird eine Regelstrategie der Klopfregelung vorgestellt, wobei als Regelstrategie vorgesehen ist, dass ausgehend von einer ersten Einspritzung in einem ersten Arbeitsspiel iₙ'; n = 1 ein so genannter Absteuerzyklus durchgeführt wird, der nachfolgend erläutert wird.

Die Grundidee besteht darin, dass in der Regelstrategie berücksichtigt wird, dass die Wassermenge, die innerhalb des Verfahrens zur Klopfregelung benötigt wird, gering ist.

Eine erste Maßnahme besteht darin, dass die zylinderindividuelle Wasserspritzung nicht dauerhaft, sondern nur im kurzzeitigen Bedarfsfall aktiviert wird, nämlich dann, wenn zylinderindividuell eine klopfende Verbrennung erkannt wird (vergleiche iₙ; n = 2 in Figur 1).

Somit ist zunächst grundsätzlich sichergestellt, dass ein geringer Wasserverbrauch vorliegt, so dass entweder ein Wiederauffüllintervall eines separaten Wassertanks sehr lang wird oder aber onBoard generiertes Wasser eingesetzt werden kann. Dadurch muss onBoard nur eine geringe Menge an Wasser erzeugt und zur Verfügung gestellt werden.

Darüber hinaus wird zur sicheren Vermeidung der zylinderindividuellen klopfenden Verbrennung und zur weiteren Verringerung des Wasserverbrauchs eine Regelstrategie vorgeschlagen, bei der ausgehend von einer ersten Einspritzung in einem ersten Arbeitsspiel iₙ'; n = 1 ein Absteuerzyklus vorgesehen ist.

Dabei wird in Abhängigkeit eines Betriebspunktes eines Motors nach der Erkennung der klopfenden Verbrennung mindestens eines Zylinders im Arbeitsspiel iₙ; n = 2 gemäß Figur 1 eine Anfangs-Einspritzmenge beziehungsweise Erst-Einspritzmenge Q_{E} gewählt, die im Arbeitsspiel iₙ'; n = 1 eingespritzt wird. Die motor- und betriebspunktabhängige Applikation erfolgt anhand zuvor im Praxisbetrieb ermittelter Kennlinien beziehungsweise Kennlinienfelder, welche zum Zeitpunkt t_{K}, in dem die klopfende Verbrennung des mindestens einen Zylinders erkannt wurde, welche die Intensität des Klopfen, das heißt die Amplitudenhöhe des durch einen Klopfsensor ermittelten Klopfens des jeweilige Zylinders und/oder die Motorlast und/oder die Drehzahl und/oder die Zylindertemperatur und/oder die Außentemperatur berücksichtigen.

Dabei wird die Erst-Einspritzmenge Q_{E} derart gewählt, dass die zylinderindividuelle festgestellte klopfende Verbrennung sicher eingestellt wird, das heißt der jeweilige Zylinder auf die nicht-klopfende Seite der Klopfgrenze gebracht wird. Aufgrund der kühlenden Wirkung bei der Verdampfung des eingespritzten Wassers mit der Erst-Einspritzmenge Q_{E} sowie der klopfhemmenden Wirkung des durch die Verbrennung gebildeten Wasserdampfes reduziert sich ebenfalls die Klopfneigung im Zylinder. Das heißt die Klopfgrenze kann aufgrund der Wassereinspritzung derart verschoben werden, dass sich der Zylinder bei sich sonst nicht veränderten Randbedingungen auf der nicht-klopfenden Seite der Klopfgrenze wiederfindet, wie die Kennlinie K im Arbeitsspiel iₙ'; n = 1 verdeutlicht.

Vorgesehen ist, der in den Kennlinien beziehungsweise Kennlinienfeldern motor- und betriebspunktabhängig hinterlegten Erst-Einspritzmenge Q_{E} eine Zusatzmenge Q_{Offset}, das heißt eine vorgebbare Zusatzmenge, hinzuzufügen, die eine zusätzliche Sicherheit bewirkt, dass die nicht-klopfende Seite der Klopfgrenze erreicht wird.

Dabei ist vorgesehen, dass sich die Zusatzmenge Q_{Offset} motor- und betriebspunktabhängig verändert.

Mit anderen Worten, bei höheren Motorlasten und/oder Drehzahlen und/oder die Zylindertemperaturen und/oder die Außentemperaturen steigt nicht nur die gewählte Erst-Einspritzmenge Q_{E} entsprechend an, sondern die zusätzliche Einspritzmenge Q_{Offset} steigt mit der betriebspunktabhängig hinterlegten Erst-Einspritzmenge Q_{E} an.

Ausgehend von der in Figur 1 gezeigten Motorlast M von beispielsweise 60 % mit der Erst-Einspritzmenge Q_{E} wird weiter wie folgt vorgegangen.

In Abhängigkeit der gewählten Erst-Einspritzmenge Q_{E} beziehungsweise der mit der Zusatzmenge Q_{Offset} erhöhten Erst-Einspritzmenge Q_{E}, die zum Zeitpunkt t_{i' = 1A} eingespritzt wird, wird ein Absteuerzyklus gewählt, der eine spezifische Anzahl von weiteren Einspritzereignissen Qₙ (n > 1) in den nachfolgenden Arbeitsspielen iₙ' > 1 je Zylinder aufweist, wobei ferner von der Erst-Einspritzmenge Q_{E} ausgehend festgelegt wird, wie hoch der quantitative Sprung ΔQ_{S} zwischen der Erst-Einspritzmenge Q_{E} und der im Arbeitsspiel iₙ'; n = 2 eingespritzten weiteren Einspritzmenge Q2 ist.

Dabei wird erfindungsgemäß nicht die Motorlast und/oder die Drehzahl und/oder die Zylindertemperatur und/oder die Außentemperatur zum Zeitpunkt t_{K}, in dem die klopfende Verbrennung des mindestens einen Zylinders erkannt wurde, sondern es wird zylinderindividuell und aktuell der Zeitpunkt t_{i' = 1E} am Ende des ersten Arbeitsspieles iₙ'; n = 1, bei dem das erste Einspritzereignis Q_{E} bereits stattgefunden hat, berücksichtigt. Insbesondere die kühlende Wirkung bei der Verdampfung des eingespritzten Wassers mit der Erst-Einspritzmenge Q_{E} führt zu einem Temperaturabfall der neben den anderen Randbedingungen besonders bei der Festlegung der spezifischen Anzahl von weiteren Einspritzereignissen Qₙ (n > 1) in den nachfolgenden Arbeitsspielen iₙ' > 1 je Zylinder und bei der Festlegung der Höhe des quantitativen Sprunges ΔQₛ zwischen den Einspritzereignissen Qₙ (n > 1).

Es versteht sich, dass auch der in dem zweiten Arbeitsspiel iₙ'; n = 2 eingespritzten Mengen Q₂ zur Sicherheit eine zusätzliche Einspritzmenge Q_{Offset} (in Figur 1 nicht dargestellt) hinzugefügt werden kann.

Im gewählten Ausführungsbeispiel schließt sich an das im zweiten Arbeitsspiel iₙ'; n = 2 ausgeführte Einspritzereignis mit der Einspritzmenge Q₂ oder der Einspritzmenge Q₂ + Q_{Offset} ein drittes Arbeitsspiel iₙ'; n = 3 an, in dem ein Einspritzereignis mit der Einspritzmenge Q₃ oder der Einspritzmenge Q₃+ Q_{Offset} (nicht dargestellt) ausgeführt wird.

Dabei kann der Absteuerzyklus derart ausgebildet werden, dass sich nach der zum Zeitpunkt t_{i'= 1E} am Ende des ersten Arbeitsspieles iₙ'; n = 1 erfolgten Festlegung der spezifischen Anzahl von weiteren Einspritzereignissen Qₙ (n > 1) in den nachfolgenden Arbeitsspielen iₙ' > 1 je Zylinder und bei der Festlegung der Höhe des quantitativen Sprunges ΔQₛ zwischen den Einspritzereignissen Qₙ (n > 1) nichts mehr ändert. Das heißt, die spezifische Anzahl von weiteren Einspritzereignissen Qₙ (n > 1) und die zugehörige Höhe des quantitativen Sprunges ΔQₛ erfolgt (gemäß Figur 1) ohne weitere Anpassung der zuvor bereits festgelegten Regelgrößen.

Der Absteuerzyklus kann aber auch derart ausgebildet werden, dass beispielsweise bereits zum Zeitpunkt t_{i'= 1E} nach dem ersten Einspritzereignis im ersten Arbeitsspiel oder nach dem zweiten Einspritzereignis zum Zeitpunkt t_{i'= 2E} am Ende des zweiten Arbeitsspieles iₙ'; n = 2 (oder später) von der bereits erfolgten Festlegung der spezifischen Anzahl von weiteren Einspritzereignissen Qₙ (n > 1) in den nachfolgenden Arbeitsspielen iₙ' > 1 je Zylinder und von der Festlegung der Höhe des quantitativen Sprunges ΔQ_{S} zwischen den Einspritzereignissen Qₙ (n > 1) abgewichen wird, das heißt eine motorlastabhängige und/oder die drehzahlabhängige und/oder die zylindertemperaturanhängige und/oder die außentemperaturabhängige Anpassung der Regelgrößen erfolgt. Mit anderen Worten, es erfolgt eine kontinuierliche Regelanpassung an die zu den Zeitpunkten t_{i'= 1E}, t_{i' = 2E}, und so weiter t_{i' = nE} vorliegenden im vorgehenden Satz genannten Randbedingungen.

Die beschriebene Vorgehensweise wird als Absteuerzyklus bezeichnet, bei dem ausgehend von der Erst-Einspritzmenge Q_{E} rampenartig, wobei als Rampe der quantitativen Sprung ΔQₛ zwischen zwei in den Arbeitsspielen i' vorgenommenen Einspritzereignissen angesehen wird, in eine bestimmten Anzahl von Arbeitsspielen i' mit Einspritzereignis auf die Einspritzmenge Q₀ "herausgerampt" wird. Durch das "Rampen" wird in vorteilhafter Weise eine Reduzierung der benötigten Einspritzmenge erreicht, die Zylindertemperatur wird abgesenkt, das Klopfen wird verhindert und die Abgastemperatur wird ebenfalls in vorteilhafter Weise abgesenkt.

Erfindungsgemäß erfolgt auf das erkannte Klopfen gemäß dem gewählten Ausführungsbeispiel somit rampenförmig eine kurze, zeitlich limitierte Reaktion zwischen den Zeitpunkten t_{i' = 1A} und t_{i = 3E} (vergleiche Figur 1).

Dabei folgt die Festlegung des ersten Absteuerzyklus wesentlichen Grundfestlegungen, nämlich, dass ein Anstieg der Intensität des Klopfen, das heißt ein Anstieg der Amplitudenhöhe des durch einen Klopfsensor ermittelten Klopfens des jeweilige Zylinders und/oder ein Anstieg der Motorlast und/oder ein Anstieg der Drehzahl und/oder ein Anstieg der Zylindertemperatur und/oder ein Anstieg der Außentemperatur zu dem Zeitpunkt t_{K}, in dem
- die Festlegung der Erst-Einspritzmenge Q_{E} beziehungsweise der mit der Zusatzmenge O_{Offset} erhöhten Erst-Einspritzmenge Q_{E} und
- die Festlegung der spezifischen Anzahl von weiteren Einspritzereignissen Qₙ (n > 1) in den nachfolgenden Arbeitsspielen i_{n'} > 1 je Zylinder im ersten Absteuerzyklus und
- die erste Festlegung der Höhe der quantitativen Sprünge ΔQ_{S} im ersten Absteuerzyklus erfolgt,
zu einem Anstieg
- der Festlegung der Erst-Einspritzmenge Q_{E} beziehungsweise der mit der Zusatzmenge O_{Offset} erhöhten Erst-Einspritzmenge Q_{E} im ersten Absteuerzyklus und
- der ersten Festlegung der spezifischen Anzahl von weiteren Einspritzereignissen Qₙ (n > 1) in den nachfolgenden Arbeitsspielen iₙ' > 1 je Zylinder im ersten Absteuerzyklus und
zu einer Reduzierung
- der ersten Festlegung der Höhe der quantitativen Sprünge ΔQ_{S} im ersten Absteuerzyklus führt.

Mit anderen Worten, die Regelstrategie der ausschließlich mit Wassereinspritzung gefahrenen Klopfregelung zeichnet sich durch mindestens einen Absteuerzyklus ("Herausrampen") auf, der in Abhängigkeit des Anstieges der Amplitudenhöhe des durch einen Klopfsensor ermittelten Klopfens des jeweiligen Zylinders und/oder des Anstieges der Motorlast und/oder des Anstieges der Drehzahl und/oder des Anstieges der Zylindertemperatur und/oder des Anstieges der Außentemperatur, bei dem das Anfangsniveau der ersten Erst-Einspritzmenge Q_{E} + Q_{Offset} ansteigt, die Anzahl Qₙ (n > 1) der zuerst festgelegten Rampen ansteigt und die Rampenhöhe ΔQₛ reduziert wird.

Erfindungsgemäß wird die jeweilige zylinderindividuelle Einspritzung bevorzugt direkt in den Brennraum des jeweiligen Zylinders erfolgen. Bevorzugt beginnen die Einspritzereignisse gemäß dem gezeigten Ausführungsbeispiel zum Zeitpunkt t_{i' = 1A}, t_{i' = 2A} und t_{i' = 3A} werden so gewählt, dass sie in den Kompressionshub einspritzen, insbesondere in den beginnenden Kompressionshub des Kolbens im jeweiligen Zylinder einspritzen.

Bei der zylinderindividuellen Einspritzung direkt in den Brennraum des jeweiligen Zylinders ist zu den im Ausführungsbeispiel gezeigten Zeitpunkten t_{i' = 1A}, t_{i' = 2A} und t_{i' = 3A} in einer anderen Ausführungsvariante vorgesehen, dass die Einspritzereignisse beginnen, wenn die zylinderseitigen Einlassventile geschlossen sind.

Bei der zylinderindividuellen Einspritzung direkt in den Brennraum des jeweiligen Zylinders ist zu den im Ausführungsbeispiel gezeigten Zeitpunkten t_{i' = 1A}, t_{i' = 2A} und t_{i' = 3A} in einer noch anderen Ausführungsvariante vorgesehen, dass die Einspritzereignisse beginnen, wenn die Verbrennung bereits eingeleitet wurde.

In anderen Ausführungsvarianten erfolgt die zylinderindividuelle Einspritzung indirekt in den Brennraum saugrohrseitig, insbesondere in die zylinderzugehörigen Einlasskanäle, wobei die Einspritzereignisse gemäß dem gezeigten Ausführungsbeispiel zum Zeitpunkt t_{i' = 1A}, t_{i' = 2 A} und t_{i = 2A} beginnen, wenn das zugehörige Einlassventil kurz vor seiner Öffnung steht oder gerade geöffnet ist, so dass die Einspritzung in dem Ansaughub, insbesondere in den beginnenden Ansaughub, des Kolbens des jeweiligen Zylinders durchgeführt wird.

Bevorzugt ist vorgesehen, eine zylinderindividuelle Direkteinspritzung durchzuführen, wobei die Vorteile darin bestehen, dass der geringste Wasserbedarf und zudem die schnellste Wirkung zur Herstellung eines klopffreien Betriebes zu erwarten ist. Des Weiteren erlaubt die direkte Wassereinspritzung, wie zuvor erläutert, auch einen Eingriff, wenn die Einlassventile bereits geschlossen sind oder die Verbrennung bereits eingeleitet wurde.

Gegenüber der dauerhaften Wassereinspritzung wird die Menge an benötigtem Zusatzmedium deutlich gesenkt. Gegenüber der Klopfregelung per Zündwinkelrücknahme ergeben sich die Vorteile, dass aufgrund des Eingriffs per Wassereinspritzung zum einen der Wirkungsgrad der Verbrennung nicht verschlechtert und sich zum anderen die Abgastemperatur nicht erhöht, sondern sogar reduziert wird.

### Bezugszeichenliste

- iₙ: n-tes Arbeitsspiel ohne Einspritzung
- iₙ; n = 1: erstes Arbeitsspiel ohne Einspritzung
- iₙ; n = 2: zweites Arbeitsspiel ohne Einspritzung

- i_{n'}: n-tes Arbeitsspiel mit (') Einspritzung
- iₙ'; n = 1: erstes Arbeitsspiel mit (') Einspritzung
- iₙ'; n = 2: zweites Arbeitsspiel mit (') Einspritzung
- iₙ'; n = 3: drittes Arbeitsspiel mit (') Einspritzung

- K: Zylinderdruckkennlinie p_{Z}/t ohne klopfende Verbrennung
- K*: Zylinderdruckkennlinie p_{Z}/t mit klopfender Verbrennung
- p_{Z}: Zylinderdruck
- t: Zeit

- Q_{E}: Erst-Einspritzmenge
- Q_{Offset}: Zusatz-Einspritzmenge
- Qₙ: n-te weitere Einspritzmenge
- Q₂: zweite Einspritzmenge
- Q₃: dritte Einspritzmenge
- ΔQ_{S}: Sprung/Rampe
- M: Motorlast
- t_{K}: Zeitpunkt der Erkennung der klopfenden Verbrennung
- t_{i'=nA}: n-ter Zeitpunkt des Beginns eines n-ten Arbeitsspieles mit (') Einspritzung
- t_{i'=nE}: n-ter Zeitpunkt des Endes eines n-ten Arbeitsspieles mit (') Einspritzung

- t_{i'=1A}: Zeitpunkt des Beginns des ersten Arbeitsspieles mit (') Einspritzung
- t_{i'=1E}: Zeitpunkt des Endes des ersten Arbeitsspieles mit (') Einspritzung
- t_{i'=2A}: Zeitpunkt des Beginns des zweiten Arbeitsspieles mit (') Einspritzung
- t_{i'=2E}: Zeitpunkt des Endes des zweiten Arbeitsspieles mit (') Einspritzung
- t_{i'=3A}: Zeitpunkt des Beginns des dritten Arbeitsspieles mit (') Einspritzung
- t_{i'=3E}: Zeitpunkt des Endes des dritten Arbeitsspieles mit (') Einspritzung

## Patentansprüche

1. Verfahren zur zylinderindividuellen Klopfregelung durch Einspritzung eines flüssigen Zusatzmediums in mindestens einen Zylinder einer fremdgezündeten Brennkraftmaschine mit den Schritten,
- Erkennen einer klopfenden Verbrennung in mindestens einem Zylinder der Brennkraftmaschine,
- Erfassen des Betriebspunktes der Brennkraftmaschine zu einem Zeitpunkt (t_{K}), in dem eine klopfende Verbrennung in dem mindestens einen Zylinder der Brennkraftmaschine erkannt wird,
- Aktivieren der Klopfregelung und Absetzen mindestens eines Einspritzereignisses indirekt oder direkt in den Brennraum des mindestens einen Zylinders,
**gekennzeichnet durch** die Schritte,
- Festlegung einer variablen Erst-Einspritzmenge (Q_{E}, Q_{Offset}) in Abhängigkeit des erfassten Betriebspunktes der Brennkraftmaschine zum Zeitpunkt (t_{K}), die in einem ersten Einspritzereignis (n =1) in einem ersten Arbeitsspiel (iₙ'; n = 1) des mindestens einen Zylinders eingespritzt wird, und
- Festlegung von variablen Zyklusparametern eines ersten Absteuerzyklus in Abhängigkeit des erfassten Betriebspunktes der Brennkraftmaschine zum Zeitpunkt (t_{K}), umfassend eine
∘ absteuerzyklusseitige Festlegung einer spezifischen Anzahl von weiteren Einspritzereignissen (n > 1) in den dem ersten Arbeitsspiel (iₙ'; n = 1) nachfolgenden Arbeitsspielen (iₙ' > 1) des mindestens einen Zylinders,
∘ absteuerzyklusseitige Festlegung der mindestens einen weiteren von der Erst-Einspritzmenge (Q_{E}, Q_{Offset}) ausgehenden weiteren Einspritzmenge (Qₙ) mindestens eines weiteren Einspritzereignisses in mindestens einem dem ersten Arbeitsspiel (iₙ'; n = 1) nachfolgenden Arbeitsspiel (iₙ' > 1) des mindestens einen Zylinders,
- Durchführung des Absteuerzyklus durch Absetzen des ersten Einspritzereignisses und des mindestens einen weiteren Einspritzereignisses indirekt oder direkt in den Brennraum des mindestens einen Zylinders.

2. Verfahren nach Anspruch 1,
**dadurch gekennzeichnet, dass**
zur Festlegung der Erst-Einspritzmenge (Q_{E}, Q_{Offset}) und zur Festlegung der variablen Zyklusparameter des ersten Absteuerzyklus folgende Parameter des Betriebspunktes der Brennkraftmaschine zum Zeitpunkt (t_{K})
- die Amplitudenhöhe des durch einen Klopfsensor ermittelten Klopfens des jeweiligen mindestens einen Zylinders und/oder
- die Motorlast der Brennkraftmaschine und/oder
- die Drehzahl der Brennkraftmaschine und/oder
- die Zylindertemperatur des jeweiligen mindestens einen Zylinders und/oder
- die Außentemperatur in der Umgebung der Brennkraftmaschine berücksichtigt wird/werden.

3. Verfahren nach Anspruch 1, **dadurch gekennzeichnet, dass** der zuerst festgelegte erste Absteuerzyklus nach dem Absetzen des ersten Einspritzereignisses mit der Erst-Einspritzmenge (Q_{E}, O_{Offset}) im ersten Arbeitsspiel (iₙ'; n = 1) zu einem späteren Zeitpunkt (t_{i' = nE}; t_{i' = 1E}, t_{i' = 2E},...) in Abhängigkeit des erfassten Betriebspunktes der Brennkraftmaschine zu diesem späteren Zeitpunkt (t_{i' = nE}; t_{i' = 1E}, t_{i' = 2E},...) angepasst wird, wobei eine Anpassung der variablen Zyklusparameter des ersten Absteuerzyklus durch Neufestlegung der variablen Zyklusparameter in einem nächsten Absteuerzyklus vorgenommen wird, so dass in Abhängigkeit des zu dem späteren Zeitpunkt (t_{i' = nE}; t_{i' = 1E}, t_{i' = 2E},...) erfassten Betriebspunktes eine diskontinuierliche oder kontinuierliche Regelanpassung der Klopfregelung durch Anpassung der Absteuerzyklen erfolgt.

4. Verfahren nach Anspruch 3, **dadurch gekennzeichnet, dass** zur Festlegung des nächsten Absteuerzyklus als Parameter des Betriebspunktes der Brennkraftmaschine zu dem späteren Zeitpunkt (t_{i' = rE}; t_{i' = 1E}, t_{i' = 2E},...)
- die Motorlast der Brennkraftmaschine und/oder
- die Drehzahl der Brennkraftmaschine und/oder
- die Zylindertemperatur des jeweiligen mindestens einen Zylinders und/oder
- die Außentemperatur in der Umgebung der Brennkraftmaschine berücksichtigt wird/werden.

5. Verfahren nach Anspruch 1, **dadurch gekennzeichnet, dass** zwischen der Erst-Einspritzmenge (Q_{E}, Q_{Offset}) des ersten Einspritzereignisses und der Einspritzmenge (Qₙ) des mindestens einen weiteren Einspritzereignisses in den Absteuerzyklen ein quantitativer Sprung (ΔQ_{S}) festgelegt wird, wodurch eine rampenförmige Reduzierung der Einspritzmenge (Qₙ) des mindestens einen weiteren Einspritzereignisses zwischen dem ersten Arbeitsspiel (iₙ'; n = 1) und dem mindestens einen absteuerzyklusseitigen weiteren Arbeitsspiel (iₙ' > 1) vorgenommen wird.

6. Verfahren nach Anspruch 1, **dadurch gekennzeichnet, dass** die Erst-Einspritzmenge (Q_{E}, Q_{Offset}) des ersten Einspritzereignisses größer wird, wenn die in Anspruch 2 genannten Parameter des Betriebspunktes der Brennkraftmaschine zum Zeitpunkt (t_{K}) größer werden.

7. Verfahren nach Anspruch 1, **dadurch gekennzeichnet, dass** der oder die in den Absteuerzyklen festgelegte/n quantitative/n Sprung/Sprünge (ΔQ_{S}) der weiteren Einspritzereignisse kleiner werden, wenn die in den Ansprüchen 2 oder 4 genannten Parameter des Betriebspunktes der Brennkraftmaschine zu dem Zeitpunkt (t_{K}) nach Anspruch 2 oder zu dem Zeitpunkt (t_{i' = nE}; t_{i' = 1E}, t_{i' = 2E},...) nach Anspruch 4 größer wird/werden.

8. Verfahren nach Anspruch 5, **dadurch gekennzeichnet, dass** zwischen den Einspritzereignissen festgelegte quantitative Sprünge (ΔQ_{S}) innerhalb des ersten Absteuerzyklus oder des nächsten Absteuerzyklus eine einheitliche oder eine uneinheitliche Sprunghöhe aufweisen.

9. Steuer- und/oder Regeleinrichtung für eine fremdgezündeten Brennkraftmaschine zur zylinderindividuellen Klopfregelung durch Einspritzung eines flüssigen Zusatzmediums in mindestens einen Zylinder der Brennkraftmaschine, **dadurch gekennzeichnet, dass** die Steuer- und/oder Regeleinrichtung dazu ausgebildet ist, ein Verfahren nach wenigstens einem der vorhergehenden Ansprüche 1 bis 8 durchzuführen.

10. Computerprogramm für eine Steuer- und/oder Regeleinrichtung für eine fremdgezündete Brennkraftmaschine zur zylinderindividuellen Klopfregelung durch Einspritzung eines flüssigen Zusatzmediums in mindestens einen Zylinder der Brennkraftmaschine, **dadurch gekennzeichnet, dass** das Computerprogramm zur Durchführung eines Verfahrens nach einem der Ansprüche 1 bis 8 programmiert ist.
